# EUROPÄISCHE PATENTANMELDUNG

(11) **EP 1 733 933 A2**
(43) Veröffentlichungstag der Anmeldung: **20.12.2006**
(21) Anmeldenummer: 06011456.8
(22) Anmeldetag: 02.06.2006
(51) Int. Cl.: B60R 21/34

(54) **Vorderbau für ein Kraftfahrzeug**

(30) Priorität: 13.06.2005 DE 102005027176
(71) Anmelder: GM Global Technology Operations, Inc., Detroit, MI 48265-3000 (US)
(72) Erfinder: Zielke, Stefan, 65812 Bad Soden (DE)
(74) Vertreter: Daniel, Ulrich W.P.

(57) **Zusammenfassung**

Bei einem Vorderbau (2) für ein Kraftfahrzeug ist ein Kotflügel (4) über ein Anschlussstück (6) mit einem Karosserieteil (5) verbunden. Das Anschlussstück (6) weist bei einer vorgesehenen Belastung deformierende Stützelemente (7) auf. Hierdurch ist der Vorderbau (2) bei einem Aufprall eines Fußgängers nachgiebig und dennoch besonders kostengünstig zu fertigen.

**Bezugszeichenliste**

1
Fahrgastzelle
2
Vorderbau
3
Haube
4
Kotflügel
5
Karosserieteil

6
Anschlussstück
7
Stützelement
8, 9
Flansch
10
Rand

11
Lasche
12
Basis
13
Steg
14, 15
Zunge

## Beschreibung

Die Erfindung betrifft einen Vorderbau für ein Kraftfahrzeug mit einem Karosserieteil und einem in einem seitlichen Bereich angeordneten Kotflügel mit einem Anschlussstück zur Abstützung des Kotflügels an dem Karosserieteil.

Ein solcher Vorderbau ist beispielsweise aus der DE 29 34 060 A1 bekannt. Hierbei ist das Anschlussstück als bleibend verformbares Deformationsglied mit einer im Längsschnitt angeordneten Biegung ausgebildet. Bei einem Aufprall eines Kopfes eines Fußgängers auf den Kotflügel soll sich das Anschlussstück verformen und die kinetische Energie aufnehmen. Der Kotflügel weist zudem im Bereich des Anschlussstücks einen waagerechten Schenkel für einen Wasserkanal auf. Hierdurch wird seitlich in einen Spalt zwischen Kotflügel und einer Haube eindringendes Wasser abgeleitet.

Nachteilig bei dem bekannten Vorderbau ist jedoch, dass er sehr aufwändig zu fertigen ist. Insbesondere die verschiedenen Schenkel des Wasserkanals im unmittelbar an das Anschlussstück angrenzenden Bereich erfordert einen hohen baulichen Aufwand.

Der Erfindung liegt das Problem zugrunde, einen Vorderbau der eingangs genannten Art so zu gestalten, dass er besonders einfach zu fertigen ist.

Dieses Problem wird erfindungsgemäß dadurch gelöst, dass das Anschlussstück mehrere Stützelemente zur Abstützung des Kotflügels an dem Karosserieteil hat.

Durch diese Gestaltung erfordert der Kotflügel keinen horizontalen Schenkel. Der Kotflügel lässt sich daher besonders einfach ohne den Wasserkanal des bekannten Vorderbaus fertigen. Da das Anschlusstück mehrere Stützelemente hat, weist der erfindungsgemäße Vorderbau eine besonders geringe Anzahl an Bauteilen auf. Hierbei kann durch eine entsprechende Gestaltung der Festigkeit und Anzahl der Stützelemente die vorgesehene Verformung des Anschlussstücks beim Aufprall einfach eingestellt werden.

Auf den Kotflügel einwirkende Kräfte lassen sich gemäß einer vorteilhaften Weiterbildung der Erfindung ungehindert von Halterungen oder dergleichen in das Karosserieteil einleiten, wenn der untere, von dem Kotflügel weg weisende Bereich des Anschlussstücks ausschließlich von den Stützelementen gebildet ist.

Zur weiteren Vereinfachung der Absorption der Aufprallenergie durch den erfindungsgemäßen Vorderbau trägt es bei, wenn die Stützelemente eine vorgesehene Festigkeit aufweisen und eine parallel zu dem Karosserieteil angeordnete Basis in einer vorgesehenen Lage halten.

Die Verformung der Stützelemente lässt sich gemäß einer anderen vorteilhaften Weiterbildung der Erfindung einfach einstellen, wenn die Stützelemente parallel zu dem Karosserieteil angeordnete Laschen und von den Laschen bis zu der Basis geführte Stege aufweisen.

Zur weiteren Vereinfachung der Einstellung der vorgesehenen Steifigkeit des erfindungsgemäßen Vorderbaus trägt es bei, wenn die Stege um einen vorgesehenen Winkel zur Senkrechten geneigt sind.

Der bauliche Aufwand für die Anbindung des Kotflügels an das Anschlussstück lässt sich gemäß einer anderen vorteilhaften Weiterbildung der Erfindung besonders gering halten, wenn der Kotflügel einen in Richtung des Karosserieteils weisenden Flansch hat und wenn das Anschlussstück einen an dem Flansch des Karosserieteils befestigten Flansch hat.

Das Anschlussstücks weist gemäß einer anderen vorteilhaften Weiterbildung der Erfindung ein in der Steifigkeit optimiertes Design auf, wenn der Flansch des Kotflügels und/oder der Flansch des Anschlussstücks auf den jeweils gegenüberliegenden Flansch weisende Zungen haben/hat. Dies kann auch gewichtsreduzierend wirken.

Zur weiteren Vereinfachung der Montage des erfindungsgemäßen Vorderbaus trägt es bei, wenn mehrere Stützelemente über den Flansch des Anschlussstücks miteinander verbunden sind.

Die Fertigung des Anschlussstücks gestaltet sich gemäß einer anderen vorteilhaften Weiterbildung der Erfindung besonders einfach, wenn der Flansch des Anschlussstücks und die Stützelemente einstückig aus Blech gefertigt sind.

Zur weiteren Verringerung des Gewichts des erfindungsgemäßen Vorderbaus trägt es bei, wenn die Basis eine andere Blechstärke aufweist als die Stege.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: ein Kraftfahrzeug mit einem erfindungsgemäßen Vorderbau,
- Fig. 2: eine Schnittdarstellung durch den erfindungsgemäßen Vorderbau aus Figur 1 entlang der Linie II - II,
- Fig. 3: eine perspektivische Darstellung eines Teilbereichs des erfindungsgemäßen Vorderbaus aus Figur 2 vor der Montage.

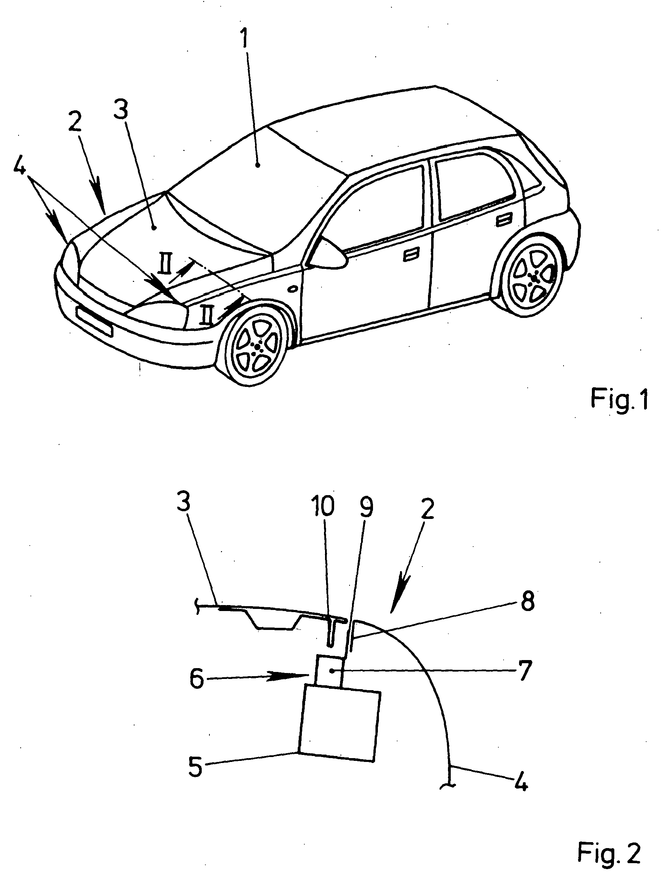

Figur 1 zeigt ein Kraftfahrzeug mit einem in Fahrtrichtung gesehen vor einer Fahrgastzelle 1 angeordneten Vorderbau 2. Der Vorderbau 2 weist zwei seitlich an eine Haube 3 angrenzende Kotflügel 4 auf.

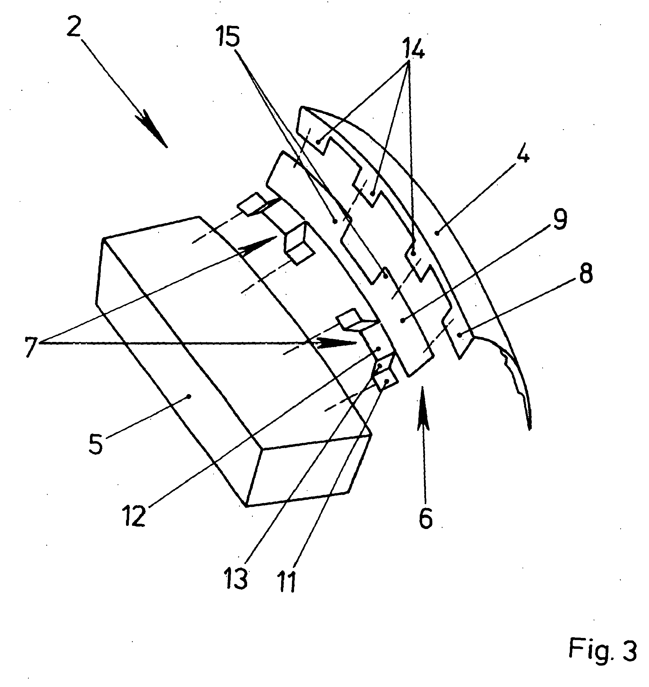

Figur 2 zeigt eine Schnittdarstellung des Vorderbaus 2 aus Figur 1 im an einen der Kotflügel 4 angrenzenden Bereich der Haube 3 mit einem unterhalb des Kotflügels 4 angeordneten Karosserieteil 5 des Kraftfahrzeuges. Bei dem Karosserieteil 5 kann es sich beispielsweise um einen Längsträger handeln. Der Kotflügel 4 ist über ein Anschlussstück 6 mit dem Karosserieteil 5 verbunden. Das Anschlussstück 6 weist Stützelemente 7 auf. Der Kotflügel 4 und das Anschlussstück 6 sind jeweils an aufeinander zugewandten Flanschen 8, 9 miteinander verbunden. Ein vertikal geführter Rand 10 der Haube 3 ist bis vor die Stützelemente geführt. Die Stützelemente 7 weisen eine vorgesehene Festigkeit auf. Bei einem Aufprall eines Fußgängers auf den Kotflügel 4 oder in einem an den Kotflügel 4 angrenzenden Bereich der Haube 3 werden die dabei entstehenden Kräfte über die Stützelemente 7 in das Karosserieteil 5 eingeleitet. Dabei verformen sich die Stützelemente 7 und absorbieren die Aufprallenergie.

Figur 3 zeigt einen Teilbereich des Vorderbaus 2 des Kraftfahrzeuges vor der Montage des Kotflügels 4 über das Anschlussstück 6 an dem Karosserieteil 5. Das Anschlussstück 6 ist mit beispielhaft nur zwei dargestellten Stützelementen 7 einstückig aus Blech gefertigt. Hierdurch lassen sich eine große Anzahl von Stützelementen 7 einstückig vorfertigen und gemeinsam an dem Karosserieteil 5 montieren. Die Stützelemente 7 weisen parallel zu dem Karosserieteil 5 angeordnete Laschen 11 und von den Laschen 11 bis zu einer Basis 12 geführte Stege 13 auf. Die Steifheit der Stützelemente 7 wird beispielsweise durch die Form und Abmessungen sowie durch die Materialauswahl und Materialstärke der Stege 13 bestimmt. Die Flansche 8, 9 des Kotflügels 4 und des Anschlussstücks 6 weisen zu ihrer Verbindung mehrere Zungen (14, 15) auf.

## Patentansprüche

1. Vorderbau (2) für ein Kraftfahrzeug mit einem Karosserieteil (5) und einem in einem seitlichen Bereich angeordneten Kotflügel (4), mit einem Anschlussstück (6) zur Abstützung des Kotflügels (4) an dem Karosserieteil (5), **dadurch gekennzeichnet, dass** das Anschlussstück (6) mehrere Stützelemente (7) zur Abstützung des Kotflügels (4) an dem Karosserieteil (5) hat.

2. Vorderbau (2) nach Anspruch 1, **dadurch gekennzeichnet, dass** der untere, von dem Kotflügel (4) weg weisende Bereich des Anschlussstücks (6) ausschließlich von den Stützelementen (7) gebildet ist.

3. Vorderbau (2) nach Anspruch 1 oder 2, **dadurch gekennzeichnet, dass** die Stützelemente (7) eine vorgesehene Festigkeit aufweisen und eine parallel zu dem Karosserieteil (5) angeordnete Basis (12) in einer vorgesehenen Lage halten.

4. Vorderbau (2) nach zumindest einem der vorhergehenden Ansprüche, **dadurch gekennzeichnet, dass** die Stützelemente (7) parallel zu dem Karosserieteil (5) angeordnete Laschen (11) und von den Laschen (11) bis zu der Basis (12) geführte Stege (13) aufweisen.

5. Vorderbau (2) nach zumindest einem der vorhergehenden Ansprüche, **dadurch gekennzeichnet, dass** die Stege (13) um einen vorgesehenen Winkel zur Senkrechten geneigt sind.

6. Vorderbau (2) nach zumindest einem der vorhergehenden Ansprüche, **dadurch gekennzeichnet, dass** der Kotflügel (4) einen in Richtung des Karosserieteils (5) weisenden Flansch (8) hat und dass das Anschlussstück (6) einen an dem Flansch (8) des Karosserieteils befestigten Flansch (9) hat.

7. Vorderbau (2) nach zumindest einem der vorhergehenden Ansprüche, **dadurch gekennzeichnet, dass** der Flansch (8) des Kotflügels (4) und/oder der Flansch (9) des Anschlussstücks (6) auf den jeweils gegenüberliegenden Flansch (8, 9) weisende Zungen (14) haben/hat.

8. Vorderbau (2) nach zumindest einem der vorhergehenden Ansprüche, **dadurch gekennzeichnet, dass** mehrere Stützelemente (7) über den Flansch (9) des Anschlussstücks (6) miteinander verbunden sind.

9. Vorderbau (2) nach zumindest einem der vorhergehenden Ansprüche, **dadurch gekennzeichnet, dass** der Flansch (9) des Anschlussstücks (6) und die Stützelemente (7) einstückig aus Blech gefertigt sind.

10. Vorderbau (2) nach zumindest einem der vorhergehenden Ansprüche, **dadurch gekennzeichnet, dass** die Basis (12) eine andere Blechstärke aufweist als die Stege (13).
